**Europäisches Patentamt**

**European Patent Office**

**Office européen des brevets**

(19)

(11) Veröffentlichungsnummer : **0 466 893 B1**

(12) # EUROPÄISCHE PATENTSCHRIFT

(45) Veröffentlichungstag der Patentschrift :
06.04.94 Patentblatt 94/14

(51) Int. Cl.⁵ : **B32B 27/04, H02K 3/30**

(21) Anmeldenummer : **91903847.1**

(22) Anmeldetag : **06.02.91**

(86) Internationale Anmeldenummer :
**PCT/AT91/00021**

(87) Internationale Veröffentlichungsnummer :
**WO 91/12133 22.08.91 Gazette 91/19**

(54) **VERFAHREN ZUR HERSTELLUNG DER ELEKTRISCHEN ISOLIERUNG DER WICKLUNG EINER ELEKTRISCHEN MASCHINE.**

(30) Priorität : **06.02.90 CS 565/90
27.09.90 PCT/AT90/00095**

(43) Veröffentlichungstag der Anmeldung :
**22.01.92 Patentblatt 92/04**

(45) Bekanntmachung des Hinweises auf die
Patenterteilung :
**06.04.94 Patentblatt 94/14**

(84) Benannte Vertragsstaaten :
**AT CH DE ES FR GB IT LI NL SE**

(56) Entgegenhaltungen :
**EP-A- 0 173 382
DE-A- 2 428 816
DE-A- 3 319 373
GB-A- 1 504 106
US-A- 4 178 411
Patent Abstracts of Japan,(C-684), 20 February 1990**

(73) Patentinhaber : **ISOVOLTA Österreichische
Isolierstoffwerke Aktiengesellschaft
Industriezentrum NÖ-Süd
A-2355 Wiener Neudorf (AT)**
Patentinhaber : **CKD TRAKCE A.S.
Fucikova 40
190 02 Praha 9 (CS)**

(72) Erfinder : **DEUTSCHMANN, Gottfried
Oberlupitscheni 60
A-8451 Heimschuh (AT)**
Erfinder : **SCHORM, Josef
Lublinská 575
181 00 Praha 8 (CS)**

(74) Vertreter : **Stampfer, Heinz
c/o Isovolta Österreichische Isolierstoffwerke
Aktiengesellschaft
A-2355 Wiener Neudorf (AT)**

## Beschreibung

Die Erfindung betrifft ein Verfahren zur Herstellung der elektrischen Isolierung der Wicklung einer elektrischen Maschine, die mit Spiel in Nuten des Rotors oder Stators eingelegte Wicklungsabschnitte, insbesondere Teilleiterbündel aufweist.

Die Qualität der elektrischen Isolierungen der Wicklungen von elektrischen Maschinen, d.h. Motoren und Generatoren, kann durch das Auftreten von Luftspalten zwischen den einzelnen Schichten der Isolation, insbesondere aber von Luftspalten zwischen der äußersten Isolationsschicht der Wicklung und den Innenwänden der im Blechpaket des Rotors oder Stators der Maschinen vorgesehenen Nuten, in welche die Wicklung aufgenommen ist, nicht unwesentlich verschlechtert werden. Solche Luftspalte beeinträchtigen nämlich den Abfluß der beim Betrieb in der Wicklung entstehenden Joule'schen Wärme in das Blechpaket.

Lufteinschlüsse und Luftspalte innerhalb der Isolierung selbst können durch die üblichen bekannten Technologien weitgehend vermieden werden. Dies gilt aber nur im beschränkten Ausmaß für die Vermeidung von Luftspalten zwischen der äußersten Schicht der Isolation und den Nuten-Innenwänden. Aus fertigungstechnischen Gründen ist es nun meist nicht möglich, die beiden Seitenwände der Nuten im Blechpaket jeweils völlig eben und planparallel herzustellen. Selbst wenn ein in die Nut einzubringendes Teilleiterbündel einen völlig exakt prismatischen Querschnitt hätte, könnte das Einbringen in die Nut nur mit einem mehr oder weniger großen Spiel zwischen der Oberfläche des isolierten Teilleiterbündels und den beiden Nut-Seitenwänden erfolgen.

Gemäß dem sogenannten "resin rich"-Verfahren zur Herstellung der Isolierung der Wicklungen von elektrischen Maschinen ist es bekannt, die Isolation aus Isoliermaterialien aufzubauen, die einen so hohen Anteil an Bindemitteln in Form von duromerem Kunstharz aufweisen, daß aufgrund des bei der Herstellung verfließenden Kunstharzes Lufteinschlüsse vermieden werden können. Dabei wird nach dem Aufbringen der Isoliermaterialien die Wicklung in einer aufwendigen Vorrichtung wärmebehandelt und in einem Preßvorgang unter Aushärtung der in der Isolation enthaltenen Kunstharze auf sehr exakte Abmessungen gebracht, wodurch ein relativ geringes Spiel zwischen der Wicklung und den Nut-Innenwänden erreicht werden kann.

Nach einem anderen, dem sogenannten Vakuumdruckimprägnierverfahren wird die Isolation der Wicklung zumindest zu einem großen Teil aus saugfähigen, porösen Isoliermaterialien aufgebaut. Nach Einbringen der Wicklung in die Nuten ergibt sich hier allerdings zunächst ein größeres Spiel zwischen Wicklung und Nut-Innenwänden. Der mit der Wicklung versehene Rotor oder Stator wird dann in einem Kessel mit einem duromeren Tränkharz imprägniert. Dabei wird in einem ersten Schritt der Rotor oder Stator im Imprägnierkessel einem Vakuum ausgesetzt, wodurch die Luft aus den Poren bzw. Spalten entfernt wird, wonach er in das Tränkharzbad eingebracht wird. Durch die anschließende Erzeugung eines überdruckes im Imprägnierkessel wird das Eindringen des Tränkharzes in die Poren und Spalten erleichtert. Bei einer anschließenden Wärmebehandlung bei erhöhter Temperatur werden das im Rotor bzw. Stator aufgenommene Tränkharz sowie die sich in der Isolierung befindlichen Bindemittel und Kunstharze ausgehärtet.

Die Erfahrung zeigt aber, daß auch bei den üblichen Vakuumdruckimprägnierverfahren das Auftreten von Luftspalten zwischen der Teilleiterisolation und den Nut-Innenwänden nicht sicher vermieden werden kann.

## Darstellung der Erfindung

Der Erfindung liegt nun die Aufgabe zugrunde, ein Verfahren zur Herstellung der elektrischen Isolierung der Wicklung eine elektrischen Maschine der eingangs der Beschreibung genannten Art anzugeben, das weniger aufwendig sein kann als die bekannten Verfahren und wobei die Gefahr des Auftretens von Luftspalten innerhalb der die Wicklung aufnehmenden Nuten des Rotors oder Stators sehr stark verringert wird.

Die der Erfindung zugrunde liegende Aufgabe wird in dem erfindungsgemäßen Verfahren gelöst, das dadurch gekennzeichnet ist, daß in den sich zwischen der Nutoberfläche und den Wicklungsabschnitten bzw. Teilleiterbündel ausbildende spaltförmige Zwischenraum ein in der Wärme expandierbares Laminat eingebracht wird, welches in zumindest einer Laminatschicht eine elastisch komprimierte Masse aus hochelastischen, elektrisch isolierenden Fasern enthält sowie ein verfestigtes, in der Wärme jedoch noch erweichbares aushärtbares Kunstharz, das die Fasermasse in ihrem komprimierten Zustand hält, und daß das Laminat danach zur Erweichung des Kunstharzes erwärmt wird, wonach das Laminat durch Entspannung der komprimierten Fasermasse elastisch expandiert und den genannten spaltförmigen Zwischenraum ausfüllt, und daß das Kunstharz danach bei erhöhter Temperatur ausgehärtet wird. Dabei erfolgt das Erwärmen des Kunstharzes vorteilhaft durch Tränken des Laminates mit einem heißen flüssigen, duromeren Kunststoff als Tränkmedium, welches die Poren des expandierten Laminats ausfüllt.

Gemäß vorteilhaften Ausgestaltungen des erfindungsgemäßen Verfahrens weist das eingesetzte Laminat an einer oder beiden Seiten an die elastisch expandierbare Schicht anschließend jeweils eine Folie aus elektrisch isolierendem Material auf, wobei das Laminat vorzugsweise mit der Folienseite zur Nutwand in den spaltförmigen Zwischenraum eingelegt wird oder es weist das eingesetzte Laminat zu beiden Seiten einer Folie aus elektrisch isolierendem Material anschließend elastisch expandierbare Schichten auf. Dabei kann im eingesetzten Laminat zumindest eine der Folien vorteilhaft aus Polyester oder Polyimid bestehen, während in ihrer elastisch expandierbaren Schicht die Fasermasse vorteilhaft aus Glasfasern, Aramidfasern oder Polyesterfasern besteht.

Nach einer anderen vorteilhaften Ausgestaltung der Erfindung ist in der elastisch expandierbaren Schicht des eingesetzten Laminats die Fasermasse auf Basis von Faservliesen, Fasermatten oder Faserfilzen hergestellt.

In einer weiteren vorteilhaften Ausgestaltung des erfindungsgemäßen Verfahrens weist die elastisch expandierbare Schicht des eingesetzten Laminats einen Kunstharzanteil von 10 bis 40, vorteilhaft aber einen Kunstharzanteil von 10 bis 28 Gew.% auf.

## Einige Wege zur Ausführung der Erfindung mit der Erläuterung der Figuren

Bei der Durchführung des erfindungsgemäßen Verfahrens wird ein Laminat benötigt, das gemäß einem Verfahrensbeispiels auf folgende Weise hergestellt wird.

Ein Glasvliesband mit einem Flächengewicht von 150 g/m², das aus geschnittenen, nicht orientierten E-Glasspinnfäden hergestellt ist, wird mit einem Harz, das zu 98,4% aus einem Epoxydharz auf Basis eines Diclycidethers des Bisphenols A und zu 1,6% aus Zinknaphtenat als latentem Beschleuniger besteht, imprägniert, so daß der Harzanteil im imprägnierten Glasvliesband 20 Gew.% besteht. Der Zusatz des Zinknaphtenats hat noch die für das weitere Verfahren vorteilhafte Wirkung, daß es den Schmelzbereich nach Kofler des eingesetzten Epoxydharzes, der um 120° C liegt, herabsetzt, so daß das Imprägnierharz selbst einen Schmelzbereich um 70° C aufweist.

Die Imprägnierung erfolgt in einer Imprägnieranlage, in der das kontinuierlich zugeführte Glasfasermattenband mit einer Lösung des Imprägnierharzes in Methylethylketon als Lösungsmittel betropft und anschließend beim Durchlauf durch einen Trockenkanal das Lösungsmittel abgedampft wird. Das so imprägnierte Glasfaserband wird dann wie üblich in Stücke abgelängt und abgestapelt.

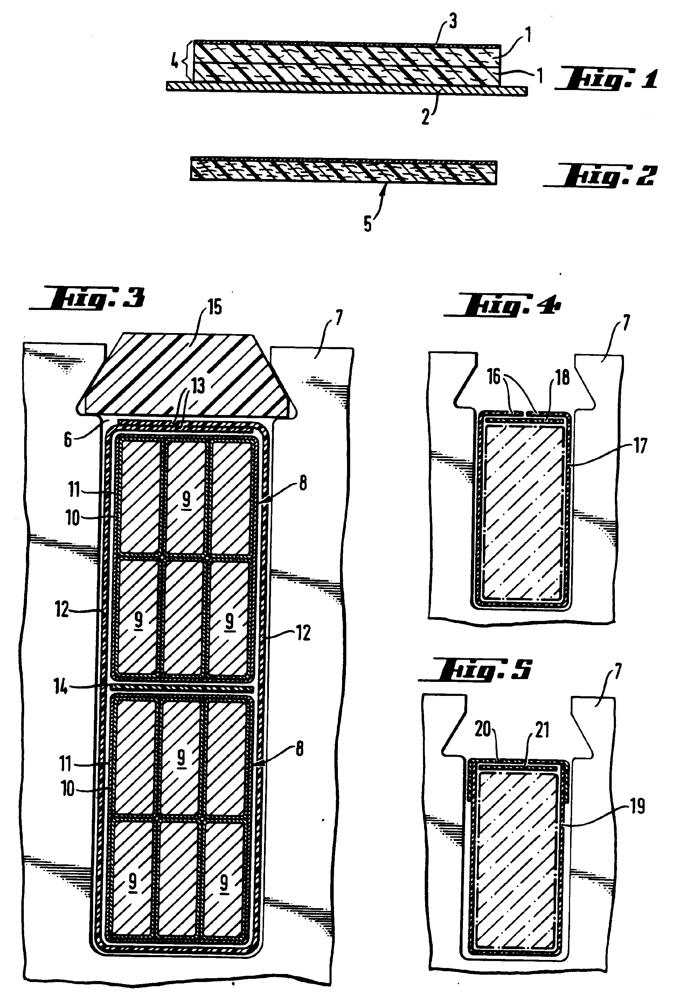

Zur Herstellung des Laminats wird nun, wie in Fig. 1 schematisch angedeutet, das imprägnierte Glasfaservlies 1 auf einem Preßblech 2 in zwei Lagen aufeinandergestapelt und schließlich mit einer Polyesterfolie 3 (Polyethylenterephthalat) einer Dicke von 0,03 mm abgedeckt. Dieser Stapel 4, der eine Dicke von ca. 1 mm aufweist, wird dann auf dem Preßblech in eine Presse mit beheiz- und rückkühlbaren Preßplatten gebracht und durch Zufahren der Preßplatten gegen Abstandsleisten auf eine Dicke von 0,33 mm komprimiert. Die Preßplatten werden dann auf 120°C aufgeheizt und diese Temperatur während ca. 1 Stunde gehalten. Dabei wird das Preßgut vollständig durchwärmt und das Imprägnierharz wegen seines niedrigen Schmelzbereiches erweicht, wonach es verfließt und sich gleichmäßig über das Volumen der Faservliese verteilt. Anschließend werden die Preßplatten und damit das Preßgut auf etwa Raumtemperatur rückgekühlt, wodurch sich das Imprägnierharz wieder verfestigt und der komprimierte Stapel 4 in das fertige Laminat 5 - siehe Figur 2 - übergeführt, das man dann aus der Presse austrägt.

Die Herstellung der elektrischen Isolierung der Wicklung einer elektrischen Maschine sowie ihre Fixierung in den Nuten sei nun anhand von Fig. 3 erläutert.

Fig. 3 zeigt den Schnitt durch eine Nut 6 im Blechpaket 7 am Rotor oder Stator mit den zwei eingelegten Teilleiterbündeln 8. Jedes Teilleiterbündel 8 besteht aus sechs Kupferleitern 9, deren Einzelleiterisolation 10 aus einem relativ bindemittelreichen Glimmer-Kunststoffolienverbund aufgebaut sein kann, und einer bindemittelarmen Teilleiterbündelisolation 11, z.B. auf Basis von Glimmer-Glasgewebeverbunden.

In die noch leeren Nuten 6 werden zunächst jeweils eine in dem quaderförmig ausgebildeten Nutenteilraum passende Hülse 12, die aus dem beschriebenen Laminat 5 zugeschnitten und vorgefaltet ist, eingelegt, wobei die in Fig. 3 übereinander liegend dargestellte Deckelbereiche 13 der Hülse 12 noch aufgefaltet sind. Danach wird die Wicklung in die Nuten 6 eingelegt, wobei zwischen den beiden Teilleiterbündeln 8 ein Streifen 14 aus dem expandierbaren Laminat 5 angeordnet wird. Anschließend werden die beiden Deckelbereich 13 der Hülse 12 übereinandergefaltet und der Nutkeil 15 eingeschoben. Fig. 3 zeigt die Anordnung in dieser Phase des Verfahrens.

Danach wird der Rotor oder Stator in üblicher Weise einer Vakuumdruckimprägnierung unterzogen und anschließend bei erhöhter Temperatur in einem Ofen ausgehärtet.

Beim Imprägniervorgang dringt das heiße und relativ dünnflüssige Tränkharz in alle freien Spalten und Poren innerhalb der Nut und der Wicklungsisolation ein, insbesondere auch in die Poren des expandierbaren Laminatmaterials der Hülse 12 und des Streifens 13. Dadurch wird das Kunstharz, welches die Fasermasse im komprimierten Zustand hält, zum Schmelzen gebracht, wodurch sich die Fasermasse elastisch entspannt, dabei die spaltförmigen Zwischenräume in der Nut gleichmäßig ausfüllt und außerdem einen Druck auf die Teilleiterbündel 8 ausübt. Durch die gleichmäßigere Ausfüllung der Zwischenräume und den ausgeübten Druck wird die Gefahr, daß nach der Imprägnierung noch Luftspalten und Lufteinschlüsse innerhalb des Isolationssystems verbleiben sowie daß sich solche Luftspalten im Laufe des Betriebes der elektrischen Maschine ausbilden, stark herabgesetzt.

Ein Vorteil der nach dem erfindungsgemäßen Verfahren hergestellten Isolation besteht auch darin, daß das Laminatmaterial selbst im Prinzip aus Komponenten besteht, wie sie üblicherweise auch zum Aufbau der Teileiterbündelisolation verwendet werden. Aus diesem Grunde kann bei dem erfindungsgemäßen Verfahren die Teilleiterbündelisolation meist dünner ausgeführt werden, als es bei den bekannten nach dem Vakuumdruckimprägnierverfahren hergestellten Isoliersystemen üblich ist.

Die Figuren 4 und 5 zeigen in Form von Prinzipdarstellungen im Schnitt andere Varianten der die Teilleiterbündel einschließenden Laminathülse. Gemäß Fig. 4 sind zwei Deckelbereiche 16 der Hülse 17 nicht einander überlappend ausgeführt, sondern sind von einem laminat-Streifen 18 unterlegt. Nach Fig. 5 besteht die Hülse aus zwei Teilen 19 und 20 mit jeweils U-förmigem Querschnitt, die sich in ihrem Schenkelbereichen überlappen. Auch hier ist der obere Hülsenteil 20 noch mit einem Laminat-Streifen 21 unterlegt. In Abänderung dieser Variante kann aber der obere Hülsenteil 20 auch aus einem nicht expandierbaren Laminat bestehen. Die elastisch expandierbaren Laminate können auch insbesondere zum Nutausgang hin in Nutlängsrichtung überlappend ausgeführt werden. Dies hat den Effekt, daß die Isolationsschichten im Übergangsbereich von der Nut zu den Wickelkopfpartien homogener werden und dadurch bessere Isolationseigenschaften ergeben als es gemäß bekannter Isolationsverfahren möglich ist.

Das beim Verfahren zum Einsatz gelangende Laminat kann aus verschiedenen Schichtkombinationen bestehen. Bei einem Zweischichtaufbau, der aus einer Folie und der elastisch expandierbaren Schicht besteht, wird z.B. für Maschinen der Klasse F eine Polyesterfolie eingesetzt und für Maschinen der Klasse H z.B. eine Polyimidfolie. Die elastisch expandierbare Schicht wird vorteilhaft aus Glasfaservlies, einer Glasfasermatte, einem Polyesterfilz oder einem Aramidfilz (Nomex®-filz) hergestellt.

Vorteilhafte weitere Beispiele mit Dickenangaben der einzelnen Schichten, Gesamtdicke vor bzw. nach dem Expandieren sind:

b) Polyimidfolie (Kapton®)                    0,025 mm
   Glasfasermatte                             0,30  mm
   gesamt                            ca.      0,33  mm
   expandiert                        ca.      1,0   mm

c) Polyesterfolie                             0,030 mm
   Glasfaservlies                             0,1   mm
   gesamt                                     0,13  mm
   expandiert                       ca.       0,25  mm

d) Polyimidfolie (Kapton®)                    0,025 mm
   Aramidfilz (Nomex®)                        0,15  mm
   gesamt                           ca.       0,19  mm
   expandiert                       ca.       0,30  mm

Das Anordnen des Laminats im Spalt zwischen Nutenwand und Teilleiteroberfläche mit zur Nutenwand zugekehrter Folie hat den Vorteil, daß die Folie bei einer Demontage der Wicklung sozusagen als Trennfolie wirkt.

Gemäß weiteren Varianten kann das Laminat auch aus einem Dreischichaufbau bestehen, wobei zu beiden Seiten der elastisch expandierbaren Laminatschicht eine Folie anschließt, oder wobei zu beiden Seiten einer solchen Folie elastisch expandierbare Schichten anschließen.

4

Gewerbliche Anwendbarkeit

Das erfindungsgemäße Verfahren kann besonders vorteilhaft bei der Herstellung von Traktionsmotoren eingesetzt werden sowie bei allen Maschinen, bei denen die Nuten im Blechpaket des Rotors oder Stators eine Nutauskleidung aufweisen.

**Patentansprüche**

1. Verfahren zur Herstellung der elektrischen Isolierung der Wicklung einer elektrischen Maschine, die mit Spiel in Nuten (6) des Rotors oder Stators eingelegten Wicklungsabschnitte, insbesondere Teilleiterbündel (8) aufweist, dadurch gekennzeichnet, daß in den sich zwischen der Nutoberfläche und den Wicklungsabschnitten bzw. Teilleiterbündel (8) ausbildende spaltförmige Zwischenraum ein in der Wärme expandierbares Laminat (5) eingebracht wird, welches in zumindest einer Laminatschicht eine elastisch komprimierte Masse aus hochelastischen, elektrisch isolierenden Fasern enthält sowie ein verfestigtes, in der Wärme jedoch noch erweichbares aushärtbares Kunstharz, das die Fasermasse in ihrem komprimierten Zustand hält, und daß das Laminat (5) danach zur Erweichung des Kunstharzes erwärmt wird, wonach das Laminat durch Entspannung der komprimierten Fasermasse elastisch expandiert und den genannten spaltförmigen Zwischenraum ausfüllt, und daß das Kunstharz danach bei erhöhter Temperatur ausgehärtet wird.

2. Verfahren nach Anspruch 1, dadurch gekennzeichnet, daß das Erwärmen des Kunstharzes durch Tränken des Laminates (5) mit einem heißen flüssigen, duromeren Kunststoff als Tränkmedium erfolgt, welches die Poren des expandierten Laminats ausfüllt.

3. Verfahren nach Anspruch 1 oder 2, dadurch gekennzeichnet, daß das eingesetzte Laminat (5) zumindest an einer Seite an die elastisch expandierbare Schicht anschließend eine Folie aus elektrisch isolierendem Material aufweist.

4. Verfahren nach Anspruch 3, dadurch gekennzeichnet, daß das Laminat (5) mit der Folienseite zur Nutwand in den Spaltförmi- gen Zwischenraum eingelegt wird.

5. Verfahren nach Anspruch 3 oder 4, dadurch gekennzeichnet, daß das eingesetzte Laminat (5) an beiden Seiten an die elastisch expandierbare Schicht anschließend jeweils eine Folie aus elektrisch isolierendem Material aufweist.

6. Verfahren nach einem der Ansprüche 1 bis 3, dadurch gekennzeichnet, daß das eingesetzte Laminat (5) zu beiden Seiten einer Folie aus elektrisch isolierendem Material anschließend elastisch expandierbare Schichten aufweist.

7. Verfahren nach einem der Ansprüche 3 bis 6, dadurch gekennzeichnet, daß im eingesetzten Laminat (5) zumindest eine der Folien aus Polyester besteht.

8. Verfahren nach einem der Ansprüche 3 bis 6, dadurch gekennzeichnet, daß im eingesetzten Laminat (5) zumindest eine der Folien aus Polyimid besteht.

9. Verfahren nach einem der Ansprüche 1 bis 8, dadurch gekennzeichnet, daß in der elastisch expandierbaren Schicht des eingesetzten Laminats (5) die Fasermasse zumindest überwiegend aus Glasfasern besteht.

10. Verfahren nach einem der Ansprüche 1 bis 8, dadurch gekennzeichnet, daß in der elastisch expandierbaren Schicht des eingesetzten Laminats (5) die Fasermasse zumindest überwiegend aus Aramidfasern besteht.

11. Verfahren nach einem der Ansprüche 1 bis 8, dadurch gekennzeichnet, daß in der elastisch expandierbaren Schicht des eingesetzten Laminats (5) die Fasermasse zumindest überwiegend aus Polyesterfasern besteht.

12. Verfahren nach einem der Ansprüche 1 bis 11, dadurch gekennzeichnet, daß in der elastisch expandierbaren Schicht des eingesetzten Laminats (5) die Fasermasse auf Basis von Faservliesen, Fasermatten oder Faserfilzen hergestellt ist.

**13.** Verfahren nach einem der Ansprüche 1 bis 12, dadurch gekennzeichnet, daß die elastisch expandierbare Schicht des eingesetzten Laminats (5) einen Kunstharzanteil von 10 bis 40 Gew.% aufweist.

**14.** Verfahren nach Anspruch 13, dadurch gekennzeichnet, daß die elastisch expandierbare Schicht des eingesetzten Laminats (5) einen Kunstharzanteil von 10 bis 28 Gew.% aufweist.

## Claims

1. A process for manufacturing the electrical insulation of the winding of an electrical machine, which has winding sections placed with play in the grooves (6) of the rotor or stator, particularly subconductor bundles (8), characterized in that a laminate which expands when heated (5) is placed in the gap-shaped space formed between the groove surface and the winding sections or subconductor bundles (8), with this laminate containing an elastically compressible substance of highly elastic electrically insulating fibers in at least one of its laminate layers, as well as a hardened synthetic resin, which nevertheless softens when heated, which keeps the fiber material in its compressed state, and that the laminate (5) is then heated in order to soften the synthetic resin, after which the laminate is elastically expanded through decontraction of the compressed fiber substance, thus filling up the aforementioned gap-shaped space, and the synthetic resin is then hardened at an elevated temperature.

2. The process defined in Claim 1, characterized in that heating of the synthetic resin takes place via impregnation of the laminate (5) with a hot liquid duromer plastic as an impregnation medium, which fills up the pores of the expanded laminate.

3. The process defined in either of Claims 1 or 2, characterized in that the laminate used (5) has a film of electrically insulating material on at least one side which is adjacent to the elastically expanding layer.

4. The process defined in Claim 3, characterized in that the laminate (5) is placed with the film side facing the groove wall in the gap-shaped space.

5. The process defined in either of Claims 3 or 4, characterized in that the laminate used (5) has a film of electrically insulating material on both sides adjacent to the elastically expandable layer.

6. The process defined in one of Claims 1 through 3, characterized in that the laminate used (5) has a film of electrically insulating material on both sides adjacent to the electrically expandable layers.

7. The process defined in one of Claims 3 through 6, characterized in that in the laminate used (5), at least one of the films consists of polyester.

8. The process defined in one of Claims 3 through 6, characterized in that in the laminate used (5), at least one of the films consists of polyimide.

9. The process defined in one of Claims 1 through 8, characterized in that the fiber substance in the elastically expandable layer of the laminate used (5) consists primarily of glass fibers.

10. The process defined in one of Claims 1 through 8, characterized in that the fiber substance in the elastically expandable layer of the laminate used (5) consists at least predominantly of aramide fibers.

11. The process defined in one of Claims 1 through 8, characterized in that the fiber material in the elastically expandable layer of the laminate used (5) consists at least predominantly of polyester fibers.

12. The process defined in one of Claims 1 through 11, characterized in that the fiber material in the elastically expandable layer of the laminate used (5) is manufactured on the basis of a fiber fleece, fiber mats, or fiber felt.

13. The process defined in one of Claims 1 through 12, characterized in that the elastically expandable layer of the laminate used (5) has a synthetic resin content of 10 to 40% by weight.

**14.** The process defined in Claim 13, characterized in that the elastically expandable layer of the laminate used (5) has an synthetic resin content of 10 to 28% by weight.

## Revendications

**1.** Procédé de fabrication de l'isolation électrique du bobinage d'une machine électrique, qui comporte des tronçons de bobinage disposés avec du jeu dans les encoches (6) du rotor ou du stator, en particulier des faisceaux de conducteur partiel (8), caractérisé en ce que dans l'espace intermédiaire existant formant une fente entre la surface de l'encoche et les tronçons de bobinage ou les faisceaux de sous-conducteur (8), est introduit un stratifié (5) susceptible de se dilater à la chaleur, ce stratifié contenant, dans au moins une couche de stratifié une masse comprimée élastiquement en fibre isolant électrique et à grande élasticité, ainsi qu'une résine durcissable rendue rigide mais cependant encore susceptible de se ramollir à la chaleur, qui maintient la masse de fibre dans son état comprimé, et en ce que le stratifié (5) est ensuite chauffé pour ramollir la résine synthétique, à la suite de quoi le stratifié se dilate elastiquement par détente de la masse de fibre comprimée et remplit ledit espace intermédiaire formant une fente et en ce que la résine synthétique est ensuite durcie à température plus élevée.

**2.** Procédé selon la revendication 1, caractérisé en ce que l'échauffement de la résine synthétique est réalisée en imbibant le stratifié (5) avec une matière synthétique duromère chaude liquide, utilisé comme matière d'imbibition, cette matière remplissant les pores du stratifié dilaté.

**3.** Procédé selon la revendication 1 ou 2, caractérisé en ce que le stratifié inséré (5), comporte au moins sur une face se raccordant à la couche susceptible de se dilater elastiquement, une feuille en un matériau électriquement isolant.

**4.** Procédé selon la revendication 3, caractérisé en ce que le stratifié (5) est disposé dans l'espace intermédiaire formant une fente avec la face de la feuille vers la paroi de l'encoche.

**5.** Procédé selon la revendication 3 ou 4, caractérisé en ce que le stratifié inséré (5) comporte sur chacune de ses deux faces se raccordant à la couche susceptible de se dilater elastiquement, une feuille en un matériau électriquement isolant.

**6.** Procédé selon l'une des revendications 1 à 3, caractérisé en ce que le stratifié inséré (5) comporte, des deux côtés se raccordant à une feuille en matériau électriquement isolant, des couches élastiquement extensibles.

**7.** Procédé selon l'une des revendications 3 à 6, caractérisé en ce que, dans le stratifié inséré (5), au moins l'une des feuilles se compose de polyester.

**8.** Procédé selon l'une des revendications 3 à 6, caractérisé en ce que dans le stratifié inséré (5), au moins l'une des feuilles se compose de polyimide.

**9.** Procédé selon l'une des revendications 1 à 8, caractérisé en ce que dans la couche susceptible de se dilater elastiquement du stratifié inséré (5), la masse de fibre se compose, au moins de façon prépondérante, de fibres de verres.

**10.** Procédé selon l'une des revendications 1 à 8, caractérisé en ce que dans la couche susceptible de se dilater elastiquement du stratifié inséré (5), la masse de fibres se compose, au moins de façon prépondérante, de fibres aramide.

**11.** Procédé selon l'une des revendications 1 à 8, caractérisé en ce que dans la couche susceptible de se dilater elastiquement du stratifié inséré (5), la masse de fibres se compose au moins de façon prépondérante de fibres polyester.

**12.** Procédé selon l'une des revendications 1 à 11, caractérisé en ce que dans la couche susceptible de se dilater elastiquement du stratifié inséré (5), la masse de fibres est fabriquée à base de tissus non tissé de fibres, de mat de fibres ou de feutre de fibres.

**13.** Procédé selon l'une des revendications 1 à 12, caractérisé en ce que la couche élastique susceptible de se dilater elastiquement du stratifié inséré (5) comporte un pourcentage de résine synthétique de 10 à 40% en poids.

14. Procédé selon la revendication 13, caractérisé en ce que la couche élastique susceptible de se dilater elastiquement du stratifié inséré (5) comporte un pourcentage de résine synthétique de 10 à 28% en poids.

Fig. 1

Fig. 2

Fig. 3

Fig. 4

Fig. 5